Europäisches Patentamt

European Patent Office

Office européen des brevets

(11) Publication number: **0 062 500**
A1

# EUROPEAN PATENT APPLICATION

(21) Application number: 82301723.1

(22) Date of filing: 01.04.82

(51) Int. Cl.³: **F 16 L 59/02**, F 16 L 59/14, F 27 D 1/00, F 27 D 3/02

(30) Priority: 02.04.81 US 250517

(71) Applicant: Cameron Iron Works, Inc., P.O. Bcx 1212, Houston Texas 77251 (US)

(43) Date of publication of application: 13.10.82 Bulletin 82/41

(72) Inventor: Campbell, Frank, Jr., 6923 Ashmore Drive, Houston Texas 77069 (US)

(84) Designated Contracting States: AT BE CH DE FR GB IT LI LU NL SE

(74) Representative: Lucas, Brian Ronald, 135 Westhall Road, Warlingham Surrey CR3 9HJ (GB)

(54) Assembly for insulating a pipe.

(57) An assembly for insulating a pipe comprises two insulator segments (8). Each segment (8) is mounted on a frame (13) which includes a pair of supports (12) joined by a connecting bar (20). Each end of the supports (12) has a hook portion defined by a face (27) and a tab (14). The frame (13) is secured to the insulator segment by a plurality of anchors (18). A keeper (26) having a converging passageway (30) therethrough and a slot (31) therealong is applied to opposing tabs (14) and faces (27) of the insulator segments (8) urging them together and maintaining the insulator segments (8) together around the pipe without any additional support structure. The independently supported insulator can be made to fit both round pipes and new, unconventional non-circular pipes.

## ASSEMBLY FOR INSULATING A PIPE

This invention relates to an assembly for insulating a pipe.

In metallurgical reheat furnaces and other similar environments, metal workpieces are pushed or walked through the furnace and are supported by a series of skid pipes. In a pusher furnace, a complex network of vertical and horizontal watercooled pipes support the skid pipes over which the pieces are pushed. Because heat flow from the furnace into the watercooled pipe structure is forever lost, it is highly desirable to maintain effective insulation around the pipe network. Improperly insulated piping can result in as much as a thirty to thirty-five percent heat loss in the furnace, and can also cause deterioration in the pipe infrastructure causing the system to sag, warp or otherwise become distorted.

Because of the complex, tedious and labor intensive efforts necessary to reinsulate pipes from which the old insulators have fallen, furnace operators frequently continue to operate an improperly insulated furnace in order to reduce the amount of down time. Conventional insulators frequently employ the use of metal studs, bands, prongs and the like which must be individually welded to the pipe in order that the insulator may hang therefrom. Moreover, these supports must be precisely located and aligned in order to receive the compatible recesses of the insulator.

More recently, a new assembly for insulating a pipe has been designed to alleviate the archaic welding concept. Basically, this assembly consists of two insulator segments which are offsettingly aligned on opposite sides of the pipe and are then slid together where their geometry interlocks them and maintains them around the pipe as an insulator unit. In areas near furnace walls or pipe crossings, however, there is not sufficient space to permit the insulator segments to be offset and then slid together without leaving a portion of the pipe exposed as the pieces are slid together.

The present invention, at least in its preferred embodiments, reduces the shortcomings noted above as found in the prior art. In particular, it is unnecessary to offset the insulator segments before sliding them together around the pipe. The present invention will, therefore, operate in areas of the pipe structure such as pipe wall joints and pipe intersections where there has heretofore not been sufficient room to offset the insulator segments before inserting them together around the pipe.

According to the present invention there is provided an assembly for insulating a pipe, which assembly comprises a pair of insulator segments, characterized in that each of said segments is mounted on a respective frame which comprises a pair of supports joined by a connecting bar, and further characterized in that each end of said supports is provided with a hook portion so shaped and disposed than when said segments are mounted on a pipe the hook portions on one frame lie adjacent the hook portions on the other frame, and further characterized in that said assembly includes means which, when said segments are mounted on a pipe, can be mounted on adjacent hook portions to hold said segments against said pipe.

Preferably, said hook portions are so disposed that, in use, they lie between said pipe and part of said segments.

Advantageously, each hook portion comprises a face which, when said segment is mounted on a pipe, extends generally perpendicular to the surface of said pipe immediately adjacent said face, and a tab which extends generally perpendicular to said face.

Preferably, said means comprises a keeper having a tapered passageway and a slot which, when said segments are placed on a pipe, can receive a pair of adjacent tabs and a pair of adjacent faces respectively. Preferably, in such an embodiment, said slot is tapered.

Advantageously, each segment is mounted on its respective frame by a plurality of anchors each of which is connected to said frame and each of which anchors has at least two fingers which project into said segment. Advantageously, in such an embodiment at least some of said fingers are connected by cross-pieces.

For a better understanding of the invention and to
show how the same may be carried into effect, reference will
now be made, by way of example, to the accompanying drawings
in which:

Figure 1 is a perspective view showing a circular pipe, an assembly in accordance with the present
invention around the pipe, and an exploded view of an
identical assembly;

Figure 2 is an axial cross sectional view taken
along line 2-2 of Figure 1 showing the two segments of
the assembly in place around the pipe with two visible
keepers securing their respective tabs and faces;

Figure 2A is an axial cross sectional view of
another embodiment of the invention showing a different
form of the anchors projecting into the segments;

Figure 3 is a perspective view of the assembly
shown in Figure 1, the two segments being shown slightly apart to fully disclose the relationship between the
keeper and the corresponding tabs and faces;

Figure 4 is a perspective view of another embodiment of assembly in accordance with the present
invention mounted on a truncated triangular pipe and
also showing how the exposed frame conforms to the pipe
as well as the relationship of the keeper to the tabs
and faces; and

Figure 5 is a perspective view of the assembly
shown in Figure 4, showing in detail the structural
relationship between the keeper and the tabs and faces.

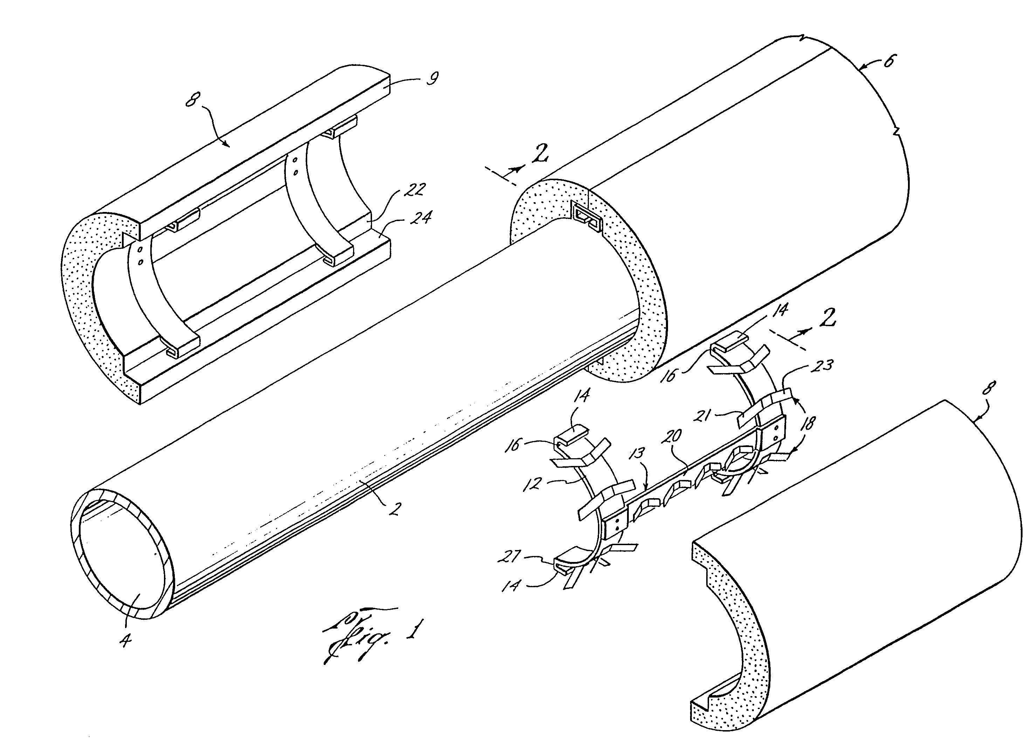

Referring to the drawings, Figure 1 shows a cylindrical pipe 2 having a passageway 4 therethrough designed to
carry a cooling fluid such as water.  In a metallurgical
reheat furnace, there are many such pipes located in whole or
in part in constricted areas.  For example, cross pipes,
which support the skid pipes over which the workpieces move,
generally run from one wall of the furnace to the other wall.

Underneath the cross pipes are occasional hairpin pipes which project upwardly from the furnace floor, turn 90$^o$ contiguous to a portion of the cross pipe and then turned an additional 90$^o$ to project downwardly into the floor. At the walls, and at these pipe junctions, there are lengths of pipe which must be insulated but which are at the same time restricted at one or both ends.

The pipe 2 is provided with two assemblies each of which comprises a pair of substantially identical segments 8 which are opposingly aligned with one another around the pipe 2.

Each segment 8 is mounted on a frame 13 which has a pair of spaced apart supports 12 which are joined by a connecting bar 20. Each end of each support 12 is provided with a hook portion which comprises a face 27 which projects outwardly from the support 12 and a tab 14. The tab 14 is spaced apart from and substantially aligned with its corresponding support 12 by a gap 16.

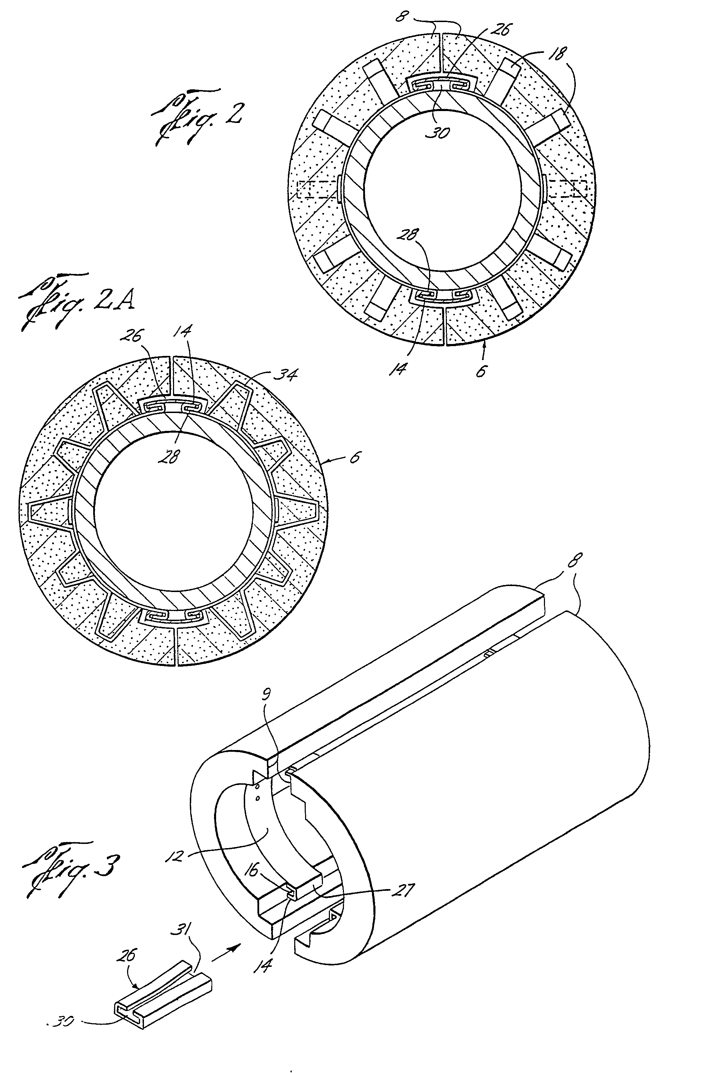

The frame 13 and the segment 8 are secured to one another by a plurality of anchors 18. As shown in Figures 1 and 2, each anchor has, by way of example, two fingers 21 and 23 which project into and are secured by the insulator segment 8. It is preferred, though not mandatory, that one finger be longer than the other as shown in the relationship of finger 21 to finger 23. This differential length in fingers ensures that the fingers do not terminate on the same arcuate surface thereby reducing the combined shear forces on a single arcuate surface.

Although the frame 13 can be located radially virtually anywhere on the segment 8, the frame 13 preferably is at least exposed to the inside surface of the insulator segment 8 so that when the insulator 6 is formed, the frame 13 is in at least partial contact with the pipe 2. The contact between the frame 13 and the pipe 2 increases the heat flow from the frame 13 into the pipe 2 thereby helping ensure that the frame 13 does not become overheated.

Figure 2A shows another embodiment of the invention wherein the fingers of adjacent anchors are connected by crosspieces 34. Preferably, the fingers and cross piece of each anchor are integrally secured to one another for reasons of economy of manufacture. Likewise, the plurality of anchors on a support as shown in Figure 2A can be an integrally manufactured part. Again, the anchors shown in Figure 2A are alternatingly of different radial lengths in order to reduce shear force concentrations on a common surface.

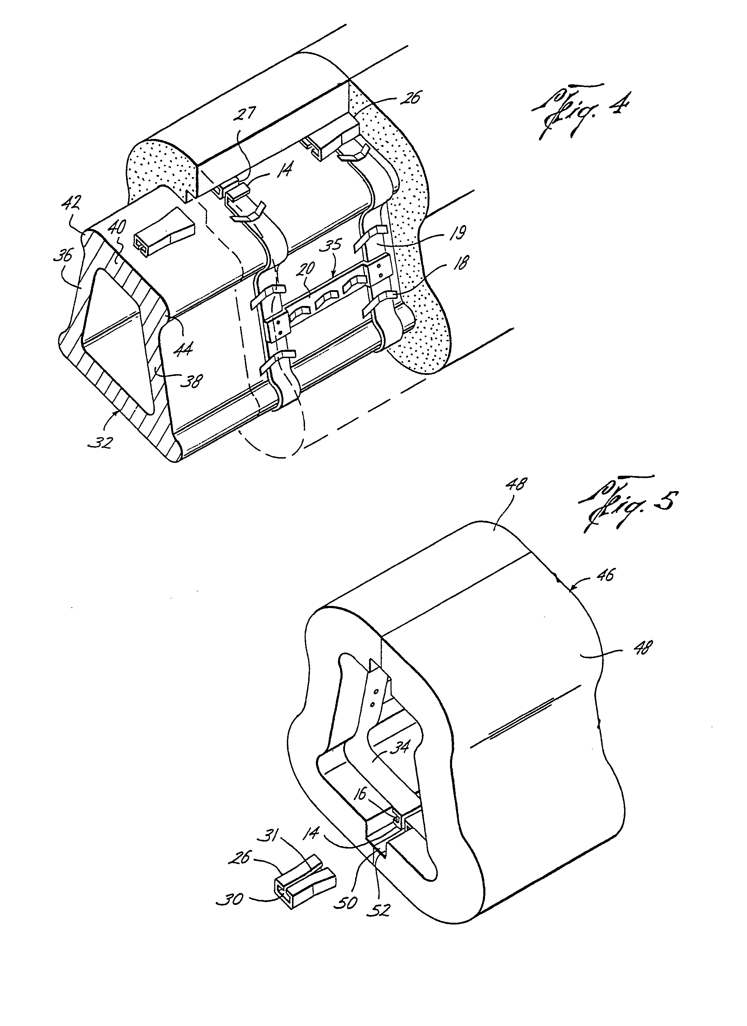

Figure 1 shows a pair of recesses in each segment 8 defined by the surfaces 22, 24. As can be deduced from Figure 3, when the two segments 8 are applied to the pipe, the surfaces 22, 24 permit the sliding reception of a keeper 26 therein.

The keeper 26 has a passageway 30 therethrough. The passageway 30 converges in a direction away from the faces 27 and tabs 14 when aligned according to Figure 3. The passageway 30 communicates through slot 31 which extends longitudinally along the keeper 26. The slot 31 also converges somewhat in the direction of convergence of the passageway 30.

In operation, when the two segments 8 are applied around the pipe 2, the faces 27 of one support, which are oppositely located from one another around the pipe 2, are approximately and opposingly disposed from the faces 27 of the corresponding support 12 on the other segment 8. Thus, the opposing tabs 14 are slidingly received within the converging passageway 30 of the keeper. The opposing faces 27 of the two insulator segments 8 are slidingly received within the converging slot 31. The gaps 16 are substantially filled with the portion of the keeper 26 proximate to the slot 31 as shown in Figure 3. When the keeper 26 is applied to the tabs 14 and faces 27, the converging slot 31 and passageway 30 directly urge the opposing faces 27 together thereby snugly fitting the insulator segments 8 close to one another and conformingly to the pipe 2 therein as shown in Figure 2. Resiliency within the tabs 14 and faces 27 will enhance the reception of the keeper 26.

The keeper 26 simultaneously engages the tabs and faces, aligns them and urges them together around the pipe without any relative longitudinal movement of the segments. The keeper/tab/face assembly secures the insulator 6 anywhere along the pipe 2 without having to align any recesses in the insulator with studs welded to the pipe.

As shown in Figure 3, four keepers, two on each end of the insulator segments 8, firmly lock the insulator segments around the pipe resulting in the insulator 6 of Figure 1.

Figures 4 and 5 show an analogous, but different embodiment, of the present invention. A truncated triangular pipe 32, which has a substantially improved section modulus over a corresponding cylindrical pipe, is shown in Figure 4. Again, a frame 35 performs the same function as its counterpart frame 13 in the cylindrical insulator 6. The spaced apart supports 19 serve the same purpose as the spaced apart supports 12, but, of course, are of a different shape in order to conform with the exterior surface of the pipe 32. The spaced apart supports 19 are again joined by a connecting bar 20. The frame 35 can be anchored to the insulator segment 48 by the same anchors 18 as previously described. Again, each support 19 terminates at each end thereof in a face 27 provided with an integrally formed tab 14 spaced apart from the support 19 by a gap 16. The keeper 26 operates as previously described to urge the insulator segments 48 into intimate and conforming relationship around the pipe 32 to form the insulator 46.

The insulator segments 8 and 48 for either embodiment can be applied perpendicularly to the axis of the pipe. Those sections of pipe extending into a wall or intersecting with additional pipes can quickly and easily be insulated without sophisticated equipment or requiring a worker with a high technical skill level.

Various modifications to the embodiments described are envisaged. Thus, the supports could be embedded in the segment (8) and the face (27) could extend towards the pipe with the tab (14) adjacent the pipe. The slot (31) would then face away from the pipe rather than towards it. This embodiment is not however preferred for the heat transfer reasons discussed above.

It is also conceivable that the tabs (14) could be tapered rather than the keeper (26).

## CLAIMS

1.     An assembly for insulating a pipe, which assembly comprises a pair of insulator segments (8), characterized in that each of said segments (8) is mounted on a respective frame (13) which comprises a pair of supports (12) joined by a connecting bar (20), and further characterized in that each end of said supports (12) is provided with a hook portion so shaped and disposed than when said segments (8) are mounted on a pipe the hook portions on one frame lie adjacent the hook portions on the other frame, and further characterized in that said assembly includes means (26) which, when said segments (8) are mounted on a pipe, can be mounted on adjacent hook portions to hold said segments (8) against said pipe (2).

2.     An assembly according to Claim 1, characterized in that said hook portions are so disposed that, in use, they lie between said pipe and part of said segments.

3.     An assembly according to Claims 1 or 2, characterized in that each hook portion comprises a face (27) which, when said segment is mounted on a pipe, extends generally perpendicular to the surface of said pipe immediately adjacent said face (27), and a tab (14) which extends generally perpendicular to said face (27).

4.     An assembly according to Claim 3, characterized in that said means (26) comprises a keeper having a tapered passageway (30) and a slot (31) which, when said segments are placed on a pipe, can receive a pair of adjacent tabs (14) and a pair of adjacent faces (27) respectively.

5.     An assembly according to Claim 4, wherein said slot (31) is tapered.

6.     An assembly according to any preceding Claim, characterized in that each segment (8) is mounted on its respective frame (13) by a plurality of anchors (18) each of which is connected to said frame (13) and each of which anchors (18) has at least two fingers (21, 23) which project into said segment (8).

7. An assembly according to Claim 6, characterized in that at least some of said fingers are connected by cross-pieces (34).

Fig. 1

Fig. 2

Fig. 2A

Fig. 3

Fig. 4

Fig. 5

European Patent Office

**EUROPEAN SEARCH REPORT**

0062500

Application number

EP 82301723.1

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | GB - A - 1 369 283 (URQUHART)<br>* Fig. 1-4 *<br>-- | 1,2 | F 16 L 59/02<br>F 16 L 59/14<br>F 27 D 1/00<br>F 27 D 3/02 |
| A | GB - A - 1 555 416 (CARBORUNDUM COMPANY)<br>* Totality *<br>-- | 1,2 | |
| A | DE - A - 2 354 883 (COMBUSTION ENGINEERING INC.)<br>* Fig. 1-4 *<br>& US-A-3 781 167<br>-- | 1,2 | TECHNICAL FIELDS SEARCHED (Int.Cl. ³)<br><br>F 16 L 59/00 |
| A | DE - A1 - 2 740 877 (COMBUSTION ENGINEERING INC.)<br>* Page 5, lines 22-26 *<br>& US-A-4 170 451<br>-- | 1 | F 27 D 1/00<br>F 27 D 3/00 |
| A | GB - A - 753 570 (LIPINSKI)<br>* Totality *<br>---- | 1 | |

| X | | The present search report has been drawn up for all claims | |
|---|---|---|---|

| Place of search<br>VIENNA | Date of completion of the search<br>17-06-1982 | Examiner<br>SCHUGANICH |
|---|---|---|

EPO Form 1503.1  06.78